# EUROPÄISCHE PATENTSCHRIFT

(11) **EP 3 203 368 B1**
(45) Veröffentlichungstag und Bekanntmachung des Hinweises auf die Patenterteilung: **02.03.2022**
(21) Anmeldenummer: 17151118.1
(22) Anmeldetag: 12.01.2017
(51) Int. Cl.: G06F 3/12

(54) **VERFAHREN ZUM AUSSCHIESSEN VON DRUCKPRODUKTEN**
METHOD FOR PERFORMING IMPOSITION FOR PRINTED PRODUCTS
PROCÉDÉ D'IMPOSITION DE PRODUITS IMPRIMÉS

(30) Priorität: 03.02.2016 DE 102016101892
(43) Veröffentlichungstag der Anmeldung: 09.08.2017
(73) Patentinhaber: manroland Goss web systems GmbH, 86153 Augsburg (DE)
(72) Erfinder: Reismueller, Franz, 86453 Dasing (DE)

(56) Entgegenhaltungen:
- EP-A2- 2 784 750
- JP-A- 2011 242 952

## Beschreibung

Die Erfindung betrifft ein Verfahren zum automatisierten Erstellen von Produktionsdatensätzen für zu druckende Aufträge für Druckprodukte mit einer Mehrzahl von Seiten, wobei das Druckprodukt aus mindestens einer Falzsignatur besteht, und wobei eine Falzsignatur aus mindestens einer aus einer Mehrzahl von Signaturbogen bestehenden Sektion oder aus mindestens einem Signaturbogen besteht, wobei der Druckinhalt eines Signaturbogens in einer virtuellen pdf-Signatur, welche aus einer Mehrzahl von pdf-Seiten und/oder mindestens einem Markensatz besteht, in einer Druckeinrichtung, wobei Jobdaten eines zu druckenden Auftrags einem Ausschießmodul zugeführt werden und wobei Produktionsmöglichkeiten von zumindest einer in der Druckeinrichtung vorhandenen Verarbeitungseinrichtung dem Ausschießmodul zur Errechnung von Ausschießdaten zur Verfügung gestellt werden und wobei das Ausschießmodul basierend auf den Jobdaten und Ausschießdaten automatisiert einen vollständigen Produktionsdatensatz, der eine eindeutige Beschreibung des zu druckenden Auftrags (Jobs) darstellt, für den zu druckenden Auftrag erstellt.

Zur Herstellung von Druckprodukten, welche aus durch mindestens eine Falzung aus einem bogen- oder bahnförmigen Bedruckstoff hergestellt werden, ist es erforderlich, vor dem Druckvorgang einen Produktionsdatensatz für dieses Druckprodukt zu erstellen. In diesem Produktionsdatensatz sind alle Informationen enthalten, die zur Herstellung des Druckproduktes erforderlich sind. Dies sind zum einen die Auflagenhöhe oder aber Produktparameter wie beispielsweise die Größe des Druckproduktes, die Seitenzahl, die Bedruckstoffart und die Bedruckstoffdicke oder Grammatur, aber auch die Lage der Falze, die Falzart, zur Herstellung des Druckproduktes erforderliche Überstände, Beschnitte, Bundzuwachs, Formatzuwachs etc. Desweiteren umfasst ein Produktionsdatensatz auch die Druckinhalte, welche üblicherweise im pdf-Format für eine jede Seite des Druckproduktes erforderlich bzw. vorhanden ist. Desweiteren ist ein wesentlicher Bestandteil, welcher zur Herstellung eines Druckproduktes erforderlich ist, die Ausschießdaten, welche die Informationen enthalten, wo und wie, in welcher Orientierung etc. welcher Druckinhalt einer Seite, welcher nachfolgend als pdf-Seite bezeichnet wird, mittels dem Druckvorgang auf den während des Druckvorganges noch ungefalzten bahn- oder bogenförmigen Bedruckstoff aufgedruckt werden muss.

Dieses Ausschießen ist deswegen so bedeutend, als dass dieses zum einen für jeden neuen Druckauftrag und somit für jedes neue Druckprodukt durchgeführt werden muss, was insbesondere bei der Herstellung von Druckprodukten in kleinen und kleinsten Auflagen einen extrem hohen Aufwand bedeutet. Derartige kleine und kleinste Auflagenhöhen werden zumeist mit sogenannten druckformvariablen Druckverfahren durchgeführt, welche aufgrund des nicht zwingend sich zyklisch wiederholenden Druckbildes auch somit ganz neue und nahezu unbegrenzte Möglichkeiten in dem Aufbau und der Gestaltung von Druckprodukten bietet.

Zur Herstellung derartiger Produktionsdaten sind aus dem Stand der Technik unterschiedliche Lösungen bekannt. So offenbart die DE°10°2012°103°679°A1 ein Produktionsplanungs- und Steuerungssystem einer Digitaldruckmaschine, bei welchem mittels einem Rechner die der Anlage zur Verfügung gestellten Ausschießschemadaten mit den Produktionsmöglichkeiten der der Digitaldruckmaschine nachgeschalteten Nachverarbeitung hinsichtlich Ausführbarkeit überprüft wird, um bereits vor dem Produktionsbeginn die Produktionsmöglichkeit zu überprüfen.

Die DE10°2013°102°759°A1 offenbart ein Produktionsplanungs- und -Steuerungssystem für Druckmaschinen, mit welchem Druckaufträge sowohl für nichtdruckformvariable als auch für druckformvariable Drucksysteme mit jeweils nachgeordneter Nachverarbeitung erstellt und dem jeweiligen Drucksystem zur Verfügung gestellt werden können.

Aus der DE°10°2014°108°477°A1 ist ein Produktionsplanungs- und Steuerungssystem einer Druckeinrichtung bekannt, bei welchem mittels eines Ausschießmoduls basierend auf den Produktionsmöglichkeiten und den Jobdaten einen Produktionsdatensatz für den zu druckenden Auftrag erzeugt wird.

EP 2 784 750 A2 und JP 2011 242952 A offenbaren weiteren Stand der Technik.

So müssen bei den aus dem Stand der Technik bekannten Lösungen die Ausschießdaten entweder manuell erzeugt werden, was in Anbetracht der hohen Anzahl an Druckjobs, welche mit einer druckformvariablen Druckmaschine wie beispielsweise einer Inkjet-Druckmaschine an einem Tag produziert werden können, sehr personalintensiv und somit wenig wirtschaftlich ist.

Auch das automatische Ausschießen ist nicht ganz unproblematisch, da aufgrund der Vielzahl von Varianten, wie ein Druckprodukt aufgebaut sein kann, eine Vielzahl von Parametern wie beispielsweise wachsende Abstände der Druckseiten zur Berücksichtigung der Dicke einer Falzsignatur, unterschiedliche Bundstege und Überstände, das Bestehen eines Druckproduktes aus unterschiedlich großen und/oder unterschiedlich dicken Falzsignaturen berücksichtigt werden müssen, was aufgrund der nahezu unendlich vielen Falzmöglichkeiten nicht hinterlegbar ist. Desweiteren muss beim Ausschießen nicht nur die korrekte Lage der pdf-Seiten zueinander beachtet werden, auch die Orientierung einer pdf-Seite, also dem digitalen Druckinhalt für eine spezielle Seite des Druckproduktes ist hierbei zu beachten.

Der Erfindung liegt daher die Aufgabe zugrunde, eine Lösung zu schaffen, die es ermöglicht, für beliebig ausgestaltete Druckprodukte automatisiert sowohl die Ausschießdaten herzuleiten und darüber hinaus automatisiert Produktionsdatensätze durch automatisches Zusammenführen von Jobdaten und Ausschießdaten zu erzeugen.

Diese Aufgabe wird durch ein Verfahren gemäß Anspruch 1 gelöst. Das erfindungsgemäße Verfahren löst die Aufgabe dadurch, dass zur Gewinnung der Ausschießdaten
a) an einer beliebigen Seite des Druckproduktes mindestens ein Ankerpunkt gesetzt wird,
b) dieser mindestens eine Ankerpunkt auf einer aufgrund eines Modells des fertigen Druckproduktes definierten Kurve auf alle Seiten des Druckproduktes übertragen wird, wobei ein jeder Schnittpunkt der Kurve mit einer jeden Seite des Druckproduktes einen neuen Seiten-Ankerpunkt ergibt,
c) die zu einem Druckprodukt gehörigen Falzsignaturen im Bedarfsfall in die jeweiligen Sektionen und/oder in die jeweiligen Signaturbögen aufgeteilt werden, so dass auf jedem der Signaturbögen abhängig von mindestens einem Produktparameter auch die Seiten-Ankerpunkte für die jeweiligen Seiten hinterlegt werden,
d) zur Fertigstellung der virtuellen pdf-Signaturen die jeweiligen pdf-Seiten und/oder Markensätze derart auf den Sektionen und/oder Signaturbögen platziert werden, so dass mindestens ein auf der pdf-Seite definierter Referenzpunkt deckungsgleich an den jeweiligen Seiten-Ankerpunkt oder den einen Ankerpunkt angeordnet wird.

Ein derartiges Verfahren weist den Vorteil auf, dass die Erstellung von Produktionsdatensätzen automatisiert auch für Druckprodukte mit sehr hohen Seitenzahlen, mit einer beliebigen Anzahl von Falzsignaturen, mit unterschiedlichsten Sammel- und Falzvarianten und/oder unterschiedlich großen Falzsignaturen für dasselbe Druckprodukt erfolgen kann. Desweiteren ist durch das erfindungsgemäße Verfahren auch die korrekte Orientierung der pdf-Seiten auf dem jeweiligen Signaturbogen sichergestellt.

In einer vorteilhaften Ausgestaltung der Erfindung wird ein erster Referenzpunkt mit den selben Koordinaten vom selben Bezugspunkt aus wie der erste Ankerpunkt auf alle zu einem Druckprodukt zugehörigen pdf-Seiten übertragen und um die zu der Umschlagkante parallele Mittellinie einer jeden zu dem selbigen Druckprodukt zugehörigen pdf-Seite zu einem zweiten Referenzpunkt gespiegelt, wobei zum lagerichtigen Platzieren einer pdf-Seite auf der entsprechenden pdf-Signatur entweder der erste oder der zweite Referenzpunkt einer pdf-Seite auf dem zugehörigen Ankerpunkt kongruent angeordnet wird und wobei die pdf-Seite gleichzeitig innerhalb der jeweiligen Platzierung des Signaturbogens angeordnet wird.

Ein derartiges Verfahren bietet somit eine entsprechende Redundanz bei der Anordnung und/oder Orientierung der Druckseiten auf den jeweiligen Signaturbögen.

Bevorzugte Weiterbildungen der Erfindung ergeben sich aus den Unteransprüchen und der nachfolgenden Beschreibung. Verschiedene Ausführungsbeispiele der Erfindung werden, ohne hierauf beschränkt zu sein, an Hand von Zeichnungen näher erläutert. Dabei zeigt:
- Fig. 1: eine beispielhafte Digitaldruckmaschine mit integriertem Kombinationsfalzwerk
- Fig. 2: ein beispielhaftes Druckprodukt bestehend aus mehreren Sektionen
- Fig. 3: eine schematische Darstellung einer bedruckten Bedruckstoffbahn
- Fig. 4: eine Visualisierung des erfindungsgemäßen Verfahrens
- Fig. 5: eine Visualisierung eines Signaturbogens mit dem erfindungsgemäßen Verfahren sowie eine beispielhafte pdf-Signatur
- Fig. 6: ein beispielhaftes Druckprodukt mit unterschiedlich großen und zueinander versetzt angeordneten Sektionen

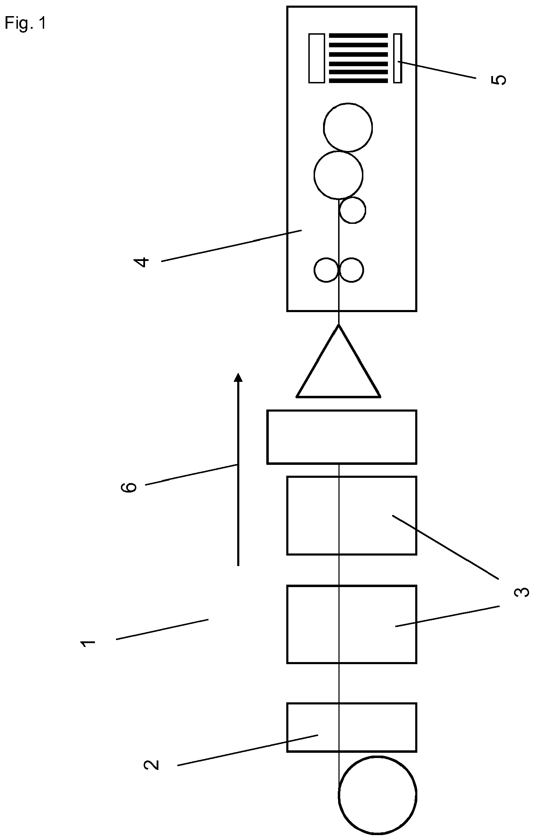

Fig. 1 stellt eine beispielhafte Digitaldruckmaschine 1 mit einem Kombinationsfalzwerk 4 dar, wie dieses beispielhaft in der DE°10°2012°103°729°A1 beschrieben ist. So wird der Bedruckstoff 10 von einem Abwickler 2 oder Rollenwechsler abgerollt, bevor dieser in der mindestens einen Druckeinheit 3 bedruckt wird. Der bedruckte Bedruckstoff 10 wird optional getrocknet und anschließend in ein Falzwerk 4 geführt. Am dargestellten beispielhaften Falzwerk 4 wird die Bedruckstoffbahn 10 optional zunächst über einen Falztrichter zur Ausbildung eines ersten Längsfalzes geführt. Anschließend wird die Bedruckstoffbahn 10 quer zur Bahnlaufrichtung 6 in einzelne Signaturbögen 11 getrennt. Anschließend können die Signaturbögen 11 optional aufgesammelt und im Anschluss daran mit einem Querfalz versehen werden. Die quergefalzten Signaturen können entweder direkt über die Falzwerkauslage 5 ausgelegt werden oder diese können vor der Auslage noch mit einem zweiten Längsfalz versehen werden. Optional ist es auch möglich, die quergefalzten Bögen in der zweiten Längsfalzeinrichtung zu sammeln, um anschließend einen Stapel quergefalzter Bögen nochmals mit einem Längsfalz zu versehen.

Ein derartiger Falz ist jedoch nur beispielhaft für eine ganze Vielzahl von Nachverarbeitungsmöglichkeiten, welche auch durch eine Mehrzahl von einzelnen, im Produktstrom gesehen hintereinander angeordneten einzelnen Falz- und/oder Sammelstationen bestehen kann.

Wie an dem Beispiel der Fig. 1 gesehen werden kann, eröffnet bereits ein einzelnes derartiges Falzwerk 4 nahezu unzählig viele unterschiedlich gefalzte bzw. zusammengesetzte Falzsignaturen 13. Diese Vielzahl lässt sich noch nahezu beliebig durch die Anordnung von der Falzwerkauslage 5 nachgeordnete Komponenten erhöhen.

Auch wenn die Fig. 1 eine Rollendigitaldruckmaschine 1 zeigt und das erfindungsgemäße Verfahren anhand einer Rollendruckmaschine 1 dargestellt wird, so ist das erfindungsgemäße Verfahren deswegen identisch für Bogendruckmaschinen 1 zu verwenden. Desweiteren ist das letztendliche Druckverfahren für das erfindungsgemäße Verfahren irrelevant, so dass das erfindungsgemäße Verfahren sowohl für druckformvariable wie beispielsweise dem Inkjet-Druckverfahren, tonerbasierten Digitaldruckverfahren als auch für nichtdruckformvariable Druckverfahren wie beispielsweise dem Offset- oder dem Tiefdruckverfahren angewendet werden kann.

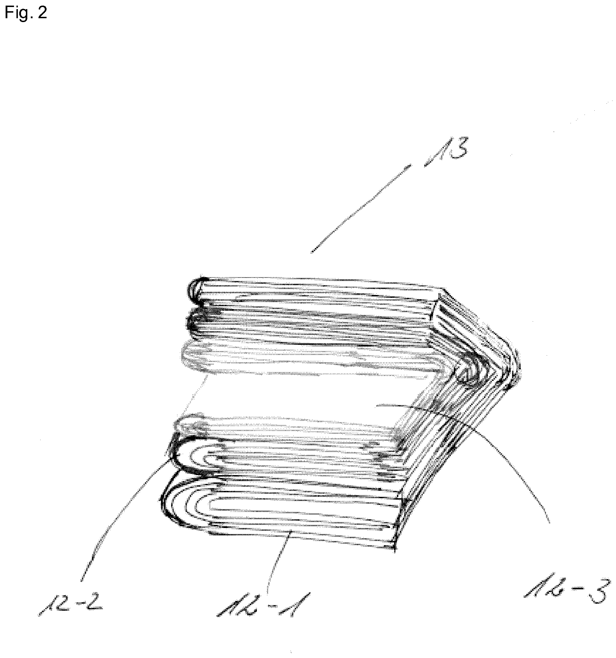

Fig. 2 zeigt beispielhaft eine Falzsignatur 13, wie diese von einem wie in Fig. 1 beispielhaft dargestelltem Falzwerk 4 an der Falzauslage ausgelegt werden kann. So besteht diese Falzsignatur 13 aus mehreren Sektionen 12, welche dadurch erzeugt werden, dass vor der Ausbildung des Querfalzes im Bedarfsfalle mehrere Signaturbogen 11 durch Aufsammeln aufeinander gelegt werden. Nach dem Ausbilden des Querfalzes werden die quergefalzten Sektionen 12 nochmals aufgesammelt und anschließend in Längsrichtung gefalzt.

Bei der in der Fig. 2 dargestellten Falzsignatur 13 werden zunächst eine Mehrzahl von zur ersten Sektion 12-1 zugehörigen Signaturbögen 11 mittels einer ersten Sammelstation aufgesammelt, anschließend quergefalzt und in einer zweiten Sammelstation abgelegt. Die nachfolgenden, zur zweiten Sektion 12-2 zugehörigen Signaturbögen 11 werden ebenfalls wieder mittels einer ersten Sammelstation aufgesammelt, anschließend quergefalzt und in der zweiten Sammelstation auf die erste bereits quergefalzte Sektion 12 abgelegt und aufgesammelt. Die dritte Sektion 12-3 besteht nur aus einem Signaturbogen 11, welcher ohne einen Sammelvorgang sofort quergefalzt und in der zweiten Sammelstation auf die zweite Sektion 12-2 abgelegt wird. Anschließend wird dieser aus drei quergefalzten Sektionen 12 bestehende Stapel längsgefalzt und als Falzsignatur 13 über die Falzwerkauslage 5 ausgelegt.

Abhängig von der Art des herzustellenden Druckproduktes 14 kann das endgültige Druckprodukt 14 auch aus einer Mehrzahl derartiger, beispielsweise identischer oder voneinander im Aufbau und hinsichtlich der Seitenzahl voneinander abweichender Falzsignaturen 13 bestehen.

Insofern wird sehr schnell verständlich, dass ein erheblicher Aufwand erforderlich ist, um die Seitenzahlen des endgültigen Druckproduktes 14 den einzelnen Signaturbögen 11 richtig zuzuordnen und die pdf-Seiten, welche den Druckinhalt einer Seite in digitaler Form beinhalten, in der richtigen Platzierung und Orientierung auf den jeweiligen Signaturbögen 11 anzuordnen.

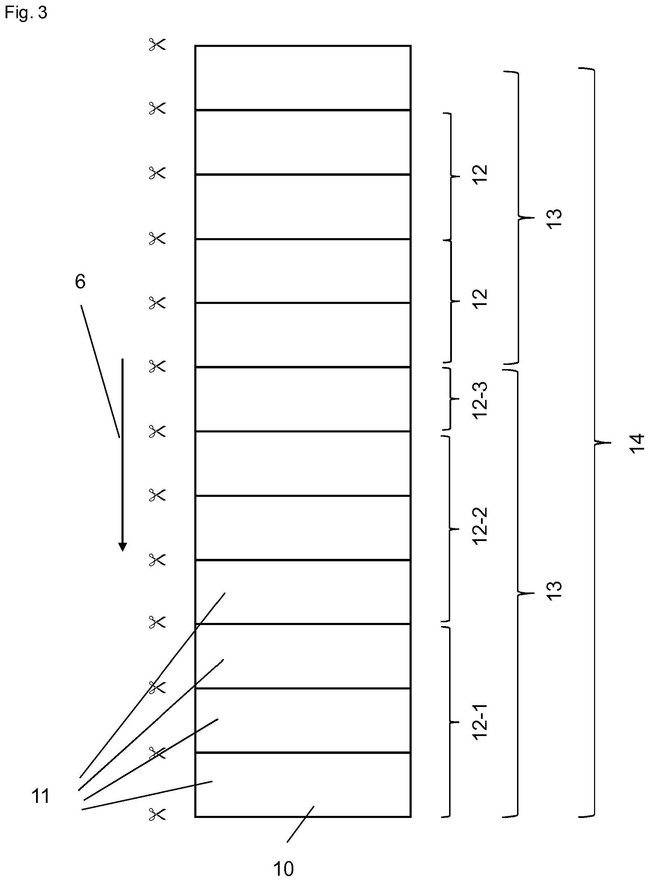

Fig. 3 zeigt zum eindeutigen Verständnis der verschiedenen Begrifflichkeiten eine Draufsicht auf die Bedruckstoffbahn 10 und die hierfür erforderliche Einteilung der Bedruckstoffbahn 10, wie diese zur Herstellung der in Fig. 2 dargestellten Falzsignatur 13 erforderlich ist.

Die Bedruckstoffbahn 10 wird in Bahnlaufrichtung 6 gesehen in gleich große Signaturbögen 11 durch Querschneiden getrennt, wobei an dieser Stelle angemerkt wird, dass die einzelnen Signaturbögen 11 bzw. die einzelnen Sektionen 12 einer Falzsignatur 13 auch unterschiedlich groß ausgeführt werden können.

Die erste Anzahl von zur ersten Sektion 12-1 zugehörigen Signaturbogen 11 wird nach dem Querschneiden aufgesammelt. Ebenso gehören zur zweiten Sektion 12-2 eine Mehrzahl von Signaturbogen 11. Da die dritte zur Falzsignatur 13 zugehörige Sektion 12-3 aus nur einem Signaturbogen 11 besteht, ist somit die dritte Sektion 12-3 mit einem einzelnen Signaturbogen 11 identisch. Die drei Sektionen 12-1, 12-2 und 12-3 bilden zusammen eine Falzsignatur 13. In Fig. 3 ist auch der Fall dargestellt, dass ein Druckprodukt 14 noch aus mindestens einer zweiten Falzsignatur 13 besteht bzw. bestehen kann.

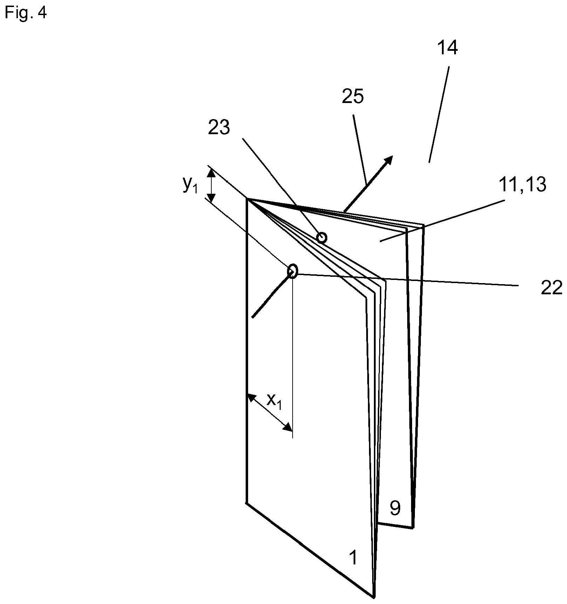

Fig. 4 zeigt das erfindungsgemäße Verfahren anhand eines deutlich einfacheren Druckproduktes 14, um die Vorgehensweise verständlicher und anschaulicher darstellen zu können.

Das in Fig. 4 beispielhaft dargestellte, zur Erläuterung des erfindungsgemäßen Verfahrens verwendete Druckprodukt 14 ist ein klassisches 16-Seiten-Druckprodukt 14, bei welchem ein Signaturbogen 11 mit 4 Seiten über die Bedruckstoffbreite und 2 Seiten hintereinander in Bahnlaufrichtung 6 zunächst mittig mittels einer ersten Längsfalzeinrichtung wie beispielsweise einem Falztrichter längsgefalzt wird, anschließend mittig quergefalzt wird um im Anschluss daran in den immer noch zwei Seiten breiten zweifach gefalzten Bogen nochmals mittig in Bahnlaufrichtung 6 zu falzen.

Für das automatisierte Erstellen von Produktionsdatensätzen für zu druckende Aufträge zur Herstellung von Druckprodukten 14 mit einer Mehrzahl von Seiten, beim dargestellten Beispiel sind dies 16 Seiten, diese Zahl kann jedoch nahezu beliebig erhöht werden, bei welchem das Druckprodukt 14 aus mindestens einer Falzsignatur 13 besteht und wobei eine Falzsignatur 13 aus mindestens einer aus einer Mehrzahl von Signaturbögen 11 bestehenden Sektion 12 oder aus mindestens einem Signaturbogen 11 besteht, wobei der Druckinhalt eines Signaturbogen 11 in einer pdf-Signatur 20, welche aus einer Mehrzahl von pdf-Seiten und/oder mindestens einem Markensatz besteht, in einer Druckeinrichtung, wobei Jobdaten eines zu druckenden Auftrags einem Ausschießmodul zugeführt werden und wobei Produktionsmöglichkeiten von zumindest einer in der Druckeinrichtung vorhandenen Verarbeitungseinrichtung dem Ausschießmodul zu Errechnung von Ausschießdaten zur Verfügung gestellt werden und wobei das Ausschießmodul basierend auf den Jobdaten und Ausschießdaten automatisiert einen vollständigen Produktionsdatensatz, der eine eindeutige Beschreibung des zu druckenden Auftrags (Jobs) darstellt, für den oder jeden zu druckenden Auftrag erstellt wird zur Gewinnung der Ausschießdaten an einer beliebigen Seite des Druckproduktes 14 mindestens ein erster Ankerpunkt 22 gesetzt. Im in Fig. 4 dargestellten Beispiel wird auf der Seite 1 ein erster Ankerpunkt 22 gesetzt, welcher im Abstand x1 vom Falzrücken in Richtung der Produktbreite und im Abstand y1 vom der oberen Produktkante in Richtung der Produkthöhe entfernt angeordnet ist. Die Lage des ersten Ankerpunktes 22 kann beliebig gewählt werden, so dass dieser erste Ankerpunkt 22 unterschiedliche Koordinaten x1 und y1 aufweisen kann. Auch kann der Bezugspunkt für die Koordinaten x1 und y1 frei gewählt werden, dieser liegt vorzugsweise auf einer Ecke, zumindest auf einer Kante des Druckproduktes 14.

Anschließend wird dieser erste Ankerpunkt 22 auf einer definierbaren Kurve 25 auf alle Seiten des Druckproduktes 14 übertragen, wobei ein jeder Schnittpunkt der Kurve 25 mit einer jeden Seite des Druckproduktes 14 einen neuen Seiten-Ankerpunkt 23 ergibt. Diese Kurve 25 kann grundsätzlich jeden beliebigen Verlauf aufweisen, wobei vorzugsweise eine Kurve 25 in Form einer Geraden verwendet wird.

Überträgt man den ersten Ankerpunkt 22 in der Form einer Geraden auf die anderen Seiten des Druckproduktes 14, so kann es sich bei Druckprodukten 14 mit hoher Seitenzahl ergeben, dass der Abstand des jeweiligen Seitenankerpunktes 23 zum jeweiligen Falzrücken verändert, da aufgrund der Bedruckstoffdicke, den Falztoleranzen etc. noch zusätzlich Platz benötigt wird. Derartige Verschiebungen der Druckbilder zu den Falzkanten müssen bei den bekannten Ausschießverfahren immer produktspezifisch angepasst werden, weshalb hierfür zumeist gut geschultes Personal erforderlich ist.

Bei Druckprodukten 14 mit hoher Seitenzahl wie beispielsweise in Fig. 2 dargestellt, kann es somit sinnfällig sein, die durch den Ankerpunkt laufende Kurve 25 nicht als Gerade auszuführen, sondern dass hierfür zur Berücksichtigung des erforderlichen Versatzes und/oder für die erforderliche Streckung einer Seite zur Kompensation mindestens eines Produktparameters wie beispielsweise die Größe der jeweiligen (pdf-)Seiten und/oder die Lage der Falze und/oder erforderliche Abstände und/oder erforderliche Überstände und/oder Falzlageverschiebungen beispielsweise zur Berücksichtigung der Lage der Falze bei dicken Druckprodukten 14 und/oder die Bedruckstoffdichte und/oder der erforderliche Beschnitt etc. durch Gestaltung der Kurve 25 mit einer zweidimensionalen oder dreidimensionalen Krümmung verwendet wird. So kann beispielsweise durch Verwendung einer parabelförmigen Kurve 25 die Kompensation der Bundstege bei dicken Falzrücken erfolgen.

Das in Fig. 4 dargestellte Beispiel wird jedoch aufgrund des relativ dünnen Druckproduktes 14 für den Fall erläutert, bei welchem die Kurve 25 als eine Gerade ausgebildet ist, welche lotrecht zu den parallel angeordneten Seiten des geschlossenen Druckproduktes 14 angeordnet ist. Diese Ausgestaltung weist den Vorteil auf, dass kein zusätzlicher Versatz über die Produktdicke des Druckproduktes 14 zu verzeichnen ist, welcher dann wieder rechnerisch kompensiert werden muss, da ein derartiger Versatz bei relativ dünnen Druckprodukten 14 aufgrund des sehr schmalen Falzrückens nicht zu berücksichtigen bzw. nicht erforderlich ist.

Ein jeder Ankerpunkt 22 wird somit auf alle Seiten des Druckproduktes 14 als Seiten-Ankerpunkt 23 übertragen. Dies kann zum einen in der Art erfolgen, als dass das Druckprodukt 14 als dreidimensionales Modell des Druckproduktes 14 abgebildet wird, so dass die Berechnung der Seiten-Ankerpunkte 23 anhand eines dreidimensionalen Modells erfolgt, bei welchem die Seiten-Ankerpunkte alle relevanten Schnittpunkte einer Kurve 25 mit den Ebenen bzw. Flächen der jeweiligen Seiten sind.

Anschaulich lässt sich ein derartiges Verfahren auch in der Form darstellen, dass auf einer beliebigen Seite, vorzugsweise jedoch auf einer außenliegenden Seite eines Falzmusters mindestens ein Ankerpunkt 22 gesetzt wird, wobei das Falzmuster an dem Ankerpunkt mittels einer Nadel durchstochen wird. Nach dem Auffalten des Falzmusters ist der Ankerpunkt in Form eines Einstiches auf alle Seiten des Falzmusters bzw. des Druckproduktes 14 als Seiten-Ankerpunkt 23 übertragbar.

Bei Anwendung eines 3D-Modells eines Druckproduktes 14 zur Übertragung des Ankerpunktes 22 als Seiten-Ankerpunkte auf die jeweiligen Seiten des Druckproduktes 14 können auch sehr einfach Druckprodukte 14 mit unterschiedlich großen und/oder zueinander versetzt angeordneten Sektionen 12 oder Falzsignaturen 13 realisiert werden.

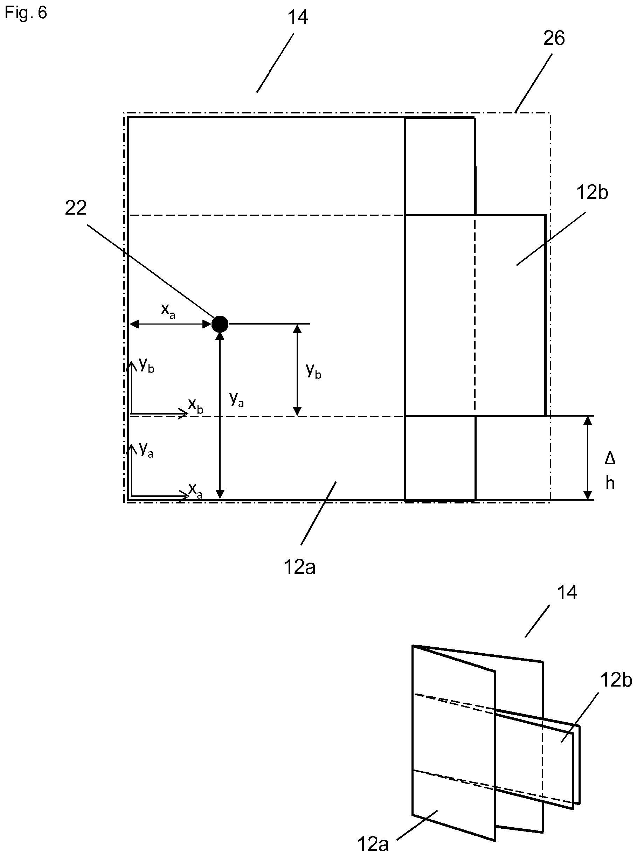

Fig. 6 zeigt ein beispielhaftes Druckprodukt 14, welches aus zwei unterschiedlich großen Sektionen 12 besteht, welche darüber hinaus noch bezüglich zumindest einer Dimension zueinander versetzt sind.

Auch für derartige Produkte ist eine konventionelle Berechnung der Koordinaten der jeweiligen Seiten-Ankerpunkte 23 möglich, ohne dass ein 3D-Modell zur Verfügung steht.

Beispielsweise wird hierzu ein alle Sektionen 12 bzw. Falzsignaturen 13 einhüllendes Rechteck verwendet, wobei vorzugsweise eine Ecke dieser Einhüllenden 26 als Ursprung eines Sektions- bzw. Falzsignatur-übergreifenden Koordinatensystem verwendet sind. Da zur Definition eines derartigen Druckproduktes 14 die Versätze der jeweiligen Sektionen 12 bzw. Falzsignaturen 13 bekannt sein müssen, lassen sich somit die Koordinaten des Ankerpunktes zum einen leicht von der Lage des Ankerpunktes in einer beliebigen Sektion 12 bzw. Falzsignatur 13 als auch umgekehrt vom dem Koordinatensystem der Einhüllenden 26 auf die jeweiligen Sektionen 12 bzw. Falzsignaturen 13 übertragen.

Bei dem in der Fig. 6 dargestelltem Beispiel besteht das Druckprodukt 14 aus einer Sektion 12a und einer Sektion 12b.

Hierbei ist bekannt, dass die Sektion 12b um das Maß Δh zur unteren Kante der Sektion 12b versetzt angeordnet ist. Wird der Ankerpunkt auf einer außenliegenden Seite der Sektion 12a mit den Koordinaten xₐ und yₐ platziert, so hat diese auch in der Einhüllenden 26 die Koordinaten xₐ und yₐ. Da der Koordinaten-Ursprung der Sektion 12a und somit auch der Einhüllenden 26 außerhalb der Sektion 12b liegt, sind die für die Seiten der Sektion 12b relevanten Seiten-Ankerpunkte 23 auf das Koordinatensystem der Sektion 12b umzurechnen. Aufgrund des in diesem Beispiel nicht vorhandenen Versatzes der beiden Signaturen in x-Richtung zueinander gilt: xₐ = x_{b}.

Der Versatz in y-Richtung zwischen der Sektion 12a und der Sektion 12b im Wert von Δh muss jedoch bei der Übertragung wie folgt berücksichtigt werden: y_{b} = yₐ - Δh. Abhängig von den Produktparametern kann dann noch innerhalb der jeweiligen Sektionen 12 ein Versatz zur Kompensation der Lage der Falze etc. berücksichtigt werden.

Dieses Berechnungsmodell der Einhüllenden 26 lässt sich auch auf beliebig komplexe und aus einer Vielzahl von unterschiedliche großen und/oder zueinander versetzt angeordneten Sektionen 12 bzw. Falzsignaturen 13 anwenden.

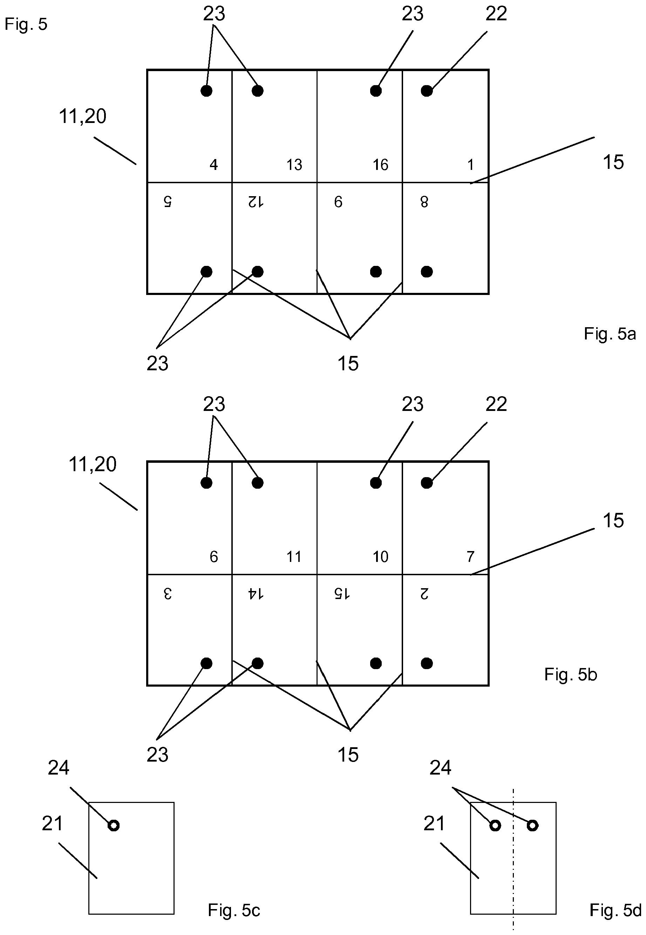

Fig. 5 zeigt den virtuellen Signaturbogen 11 bzw. eine pdf-Signatur 20, welcher ein Abbild des bei der Produktion des Druckproduktes entstehenden tatsächlichem Signaturbogen 11 bzw. eine pdf-Signatur 20 darstellt, des 16-seitigen Druckproduktes 14 der Fig.4, wobei auf dem virtuellen Signaturbogen 11 sowohl die Falzlinien 15 als auch der Ankerpunkt 22 als auch die Seiten-Ankerpunkte 23, welche nach einem der oben beschriebenen Methoden von dem Ankerpunkt 22 aus auf jede Seite übertragen wurde.

Fig. 5a zeigt die eine Seite des Signaturbogens 11, Fig. 5b zeigt die zweite Seite desselben Signaturbogens 11.

Fig. 5c zeigt beispielhaft eine pdf-Seite 21, welche von der Vorstufe bereitgestellt wird, und den Druckinhalt exakt einer Seite des Druckproduktes beinhält. Somit kann bereits in der Vorstufe jede Seite für sich inhaltlich und gestalterisch komplett fertiggestellt werden, was eine parallele Bearbeitung der jeweiligen Seiteninhalte ermöglicht.

Die in Fig. 5c dargestellte pdf-Seite 21 trägt einen Referenzpunkt 24, welcher zur korrekten Platzierung der pdf-Seite 21 auf dem virtuellen Signaturbogen 11 erforderlich ist. Wird nun eine jede der normalerweise für ein 16-seitiges Druckprodukt erforderlichen 16 pdf-Seiten 21 in der Form auf dem virtuellen Signaturbogen 11 oder einer virtuellen Sektion platziert, so ist hierzu der mindestens eine Referenzpunkt 24 einer jeden pdf-Seite 21 deckungsgleich an den jeweiligen Seiten-Ankerpunkt 23 bzw. den einen Ankerpunkt 22 angeordnet zu sein.

Nicht in Fig. 5 dargestellt, wenngleich von der Vorgehensweise identisch, kann entweder anstelle oder zusätzlich zu mindestens einer pdf-Seite 21 mindestens ein Markensatz, welcher mindestens eine Marke zur Überprüfung und/oder Steuerung von insbesondere Nachverarbeitungsvorängen umfasst, auf dem virtuellen Signaturbogen 11 mittels der kongruenten Überdeckung von Ankerpunkt 22 oder Seiten-Ankerpunkt 23 und dem auf dem Markensatz befindlichen Referenzpunkt 24 ausgerichtet werden.

Wie aus dem Beispiel der Figuren 5a und 5b ersichtlich, ist bei nur einem Referenzpunkt 24 pro pdf-Seite 21 dieser bei den geraden und ungeraden pdf-Seiten 21 spiegelbildlich zur Mittellinie der pdf-Seite ausgerichtet. Grundsätzlich ist dies sehr einfach und folgt einer strikten Gesetzmäßigkeit, dennoch bietet dieses ein gewisses, wenngleich minimales Fehlerpotential.

In vorteilhafter Weise wird zur Vermeidung dieses wenngleich geringen Risikos mindestens ein erster Referenzpunkt 24-1 mit denselben Koordinaten vom selben Bezugspunkt aus wie der mindestens eine erste Ankerpunkt 22 auf alle zu einem Druckprodukt 14 bzw. Sektion 12 oder virtuellem Signaturbogen zugehörigen pdf-Seiten 21 übertragen und um die zu der Umschlagkante parallele Mittellinie einer jeden zu dem selbigen Druckprodukt 14 und/oder Falzsignatur 13 und/oder virtuellem Signaturbogen 11 zugehörigen pdf-Seite 21 zu einem zweiten Referenzpunkt 24-2 gespiegelt, wie in Fig. 5d dargestellt. Zum lagerichtigen Platzieren einer pdf-Seite 21 auf dem entsprechenden virtuellen Signaturbogen zur Herstellung einer pdf-Signatur 20 wird entweder der erste Referenzpunkt 24-1 oder der zweite Referenzpunkt 24-2 einer pdf-Seite 21 auf dem zugehörigen Ankerpunkt 22 bzw. Seiten-Ankerpunkt 23 kongruent angeordnet und wobei die bzw. eine jede pdf-Seite 21 gleichzeitig innerhalb der jeweiligen Platzierung und somit innerhalb der jeweiligen Falzlinien 15 des virtuellen Signaturbogens 11v zur Herstellung einer pdf-Signatur 20 angeordnet ist. In diesem Falle sind jedwede Fehlermöglichkeiten einer falschen Orientierung einer pdf-Seite 21 auf dem virtuellen Signaturbogen 11 bzw. auf der pdf-Signatur 20 ausgeschlossen.

### Bezugszeichenliste

- 1: Druckmaschine
- 2: Abwickler
- 3: Druckeinheit
- 4: Falzwerk
- 5: Falzwerkauslage
- 6: Bahnlaufrichtung / Druckrichtung

- 10: Bedruckstoffbahn
- 11: Signaturbogen
- 12: Sektion
- 13: Falzsignatur
- 14: Druckprodukt
- 15: Falzlinien

- 20: pdf-Signatur
- 21: pdf-Seite
- 22: Ankerpunkt
- 23: Seiten-Ankerpunkt
- 24: Referenzpunkt
- 25: Kurve
- 26: Einhüllende

## Patentansprüche

1. Verfahren zum automatisierten Erstellen von Produktionsdatensätzen für in einer Druckeinrichtung zu druckende Aufträge für Druckprodukte (14) mit einer Mehrzahl von Seiten,
wobei ein Druckprodukt (14) aus mindestens einer Falzsignatur (13) besteht,
wobei eine Falzsignatur (13) des Druckprodukts (14) aus mindestens einer aus einer Mehrzahl von tatsächlichen Signaturbogen bestehenden Sektion (12) oder aus mindestens einem tatsächlichen Signaturbogen besteht,
wobei der Druckinhalt jedes dieser tatsächlichen Signaturbögen in einer virtuellen pdf-Signatur (20), welche aus einer Mehrzahl von pdf-Seiten (21) und/oder mindestens einem Markensatz besteht, abgebildet ist,
wobei Jobdaten eines zu druckenden Auftrags einem Ausschießmodul zugeführt werden,
wobei Produktionsmöglichkeiten von zumindest einer in der Druckeinrichtung vorhandenen Verarbeitungseinrichtung dem Ausschießmodul zur Errechnung von Ausschießdaten zur Verfügung gestellt werden,
wobei das Ausschießmodul basierend auf den Jobdaten und Ausschießdaten automatisiert einen vollständigen Produktionsdatensatz, der eine eindeutige Beschreibung des zu druckenden Auftrags (Jobs) darstellt, für den zu druckenden Auftrag erstellt,
**wobei** zur Gewinnung der Ausschießdaten
a) an einer beliebigen Seite des Druckproduktes (14) mindestens ein erster Ankerpunkt (22) gesetzt wird,
b) dieser mindestens eine erste Ankerpunkt (22) auf einer aufgrund eines Modells des fertigen Druckproduktes definierten Kurve (25) auf alle Seiten des Druckproduktes (14) übertragen wird, wobei ein jeder Schnittpunkt der Kurve (25) mit einer jeden Seite des Druckproduktes (14) einen neuen Seiten-Ankerpunkt (23) ergibt,
c) die zu einem Druckprodukt (14) gehörigen Falzsignaturen (13) im Bedarfsfall in die jeweiligen Sektionen (12) und/oder in die jeweiligen Signaturbögen (11) aufgeteilt werden, so dass auf jedem der Signaturbögen (11) abhängig von mindestens einem Produktparameter auch die Seiten-Ankerpunkte (23) für die jeweiligen Seiten hinterlegt werden,
d) zur Fertigstellung der virtuellen pdf-Signaturen (20) die jeweiligen pdf-Seiten (21) und/oder Markensätze derart auf den Sektionen (12) und/oder Signaturbögen (11) platziert werden, so dass mindestens ein auf der pdf-Seite (21) definierter Referenzpunkt (24-1, 24-2) deckungsgleich an den jeweiligen Seiten-Ankerpunkt (23) oder den einen Ankerpunkt (22) angeordnet wird.

2. Verfahren nach Anspruch 1, wobei als Kurve (25) eine Gerade verwendet wird.

3. Verfahren nach Anspruch 2, wobei die Gerade lotrecht zu den parallel angeordneten Seiten des geschlossenen Druckproduktes angeordnet wird.

4. Verfahren nach einem der Ansprüche 1 bis 3, wobei als Produktparameter beispielsweise die Größe der jeweiligen pdf-Seiten (21) und/oder die Lage der Falze und/oder erforderliche Abständen und/oder erforderliche Überstände und/oder Falzlageverschiebungen beispielsweise zur Berücksichtigung der Lage der Falze bei der dicken Druckprodukten und/oder die Bedruckstoffdichte und/oder der erforderliche Beschnitt umfasst werden.

5. Verfahren nach einem der Ansprüche 1 bis 4, wobei die Übertragung des ersten Ankerpunktes (22) mittels der Kurve (25) auf alle relevanten Seiten des Druckproduktes (14) anhand eines dreidimensionalen Modells des Druckproduktes (14) erfolgt.

6. Verfahren nach einem der Ansprüche 1 bis 5, wobei der erforderliche Versatz und/oder die erforderliche Streckung einer Seite zur Kompensation mindestens eines Produktparameters durch entsprechende zweidimensionale oder dreidimensionale Krümmung der Kurve (25) erfolgt.

7. Verfahren nach einem der Ansprüche 1 bis 6, wobei die einzelnen Falzsignaturen (13) und/oder Sektionen (12) eines Druckproduktes (14) unterschiedliche Abmessungen aufweisen und/oder zueinander versetzt angeordnet sind.

8. Verfahren nach einem der Ansprüche 1 bis 7, wobei ein erster Referenzpunkt (24-1) mit denselben Koordinaten vom selben Bezugspunkt aus wie der erste Ankerpunkt (22) auf alle zu einem Druckprodukt (14) zugehörigen pdf-Seiten (21) übertragen wird und um die zu der Umschlagkante parallele Mittellinie einer jeden zu dem selbigen Druckprodukt (14) zugehörigen pdf-Seite (20) zu einem zweiten Referenzpunkt (24-2) gespiegelt wird, wobei zum lagerichtigen Platzieren einer pdf-Seite (21) auf dem entsprechenden virtuellen Signaturbogen (11) entweder der erste oder der zweite Referenzpunkt (24-1, 24-2) einer pdf-Seite (21) auf dem zugehörigen Ankerpunkt (22, 23) kongruent angeordnet wird, und wobei die pdf-Seite (21) gleichzeitig innerhalb der jeweiligen Platzierung des Signaturbogens (11) angeordnet wird.

## Claims

1. A method for the automated creation of production data sets for orders for printed products (14) comprising a plurality of pages to be printed in a printing means, wherein a printed product (14) consists of at least one fold signature (13),
wherein a fold signature (13) of the printed product (14) consists of at least one section (12) consisting of a plurality of actual signature sheets or of at least one actual signature sheet,
wherein the print content of each of these actual signature sheets is displayed in a virtual pdf signature (20), which consists of a plurality of pdf pages (21) and/or at least one mark set,
wherein job data of an order to be printed is fed to an imposition module,
wherein production options of at least one processing means, which is present in the printing means, are provided to the imposition module to calculate imposition data,
wherein, based on the job data and imposition data, the imposition module creates a complete production data set, which represents an unambiguous description of the order (job) to be printed, in an automated manner, for the order to be printed,
wherein, to acquire the imposition data
a) at least one first anchor point (22) is placed on any page of the printed product (14),
b) this at least one first anchor point (22) on a curve (25) defined on the basis of a model of the finished printed product, is transferred to all pages of the printed product (14), wherein each point of intersection of the curve (25) with each page of the printed product (14) results in a new page anchor point (23),
c) the fold signatures (13) belonging to a printed product (14) are divided, if necessary, into the respective sections (12) and/or into the respective signature sheets (11), so that the page anchor points (23) for the respective pages are also stored on each of the signature sheets (11) as a function of at least one product parameter,
d) to finish the virtual pdf signatures (20), the respective pdf pages (21) and/or mark sets are placed onto the sections (12) and/or signature sheets (11) in such a way that at least one reference point (24-1, 24-2) defined on the pdf page (21) is arranged congruently on the respective page anchor point (23) or the one anchor point (22).

2. The method according to claim 1, wherein a straight line is used as curve (25).

3. The method according to claim 2, wherein the straight line is arranged perpendicular to the pages, which are arranged in parallel, of the closed printed product.

4. The method according to one of claims 1 to 3, wherein as product parameters, for example the size of the respective pdf pages (21) and/or the position of the folds and/or required spacing and/or required protrusions and/or fold position displacements, are comprised, for example for considering the position of the folds for the thick printed products and/or the printing material density and/or the required cut.

5. The method according to one of claims 1 to 4, wherein the transfer of the first anchor point (22) by means of the curve (25) to all relevant pages of the printed product (14) takes place by means of a three-dimensional model of the printed product (14).

6. The method according to one of claims 1 to 5, wherein the required offset and/or the required stretching of a page for the compensation of at least one product parameter takes place by means of corresponding twodimensional or three-dimensional curvature of the curve (25) .

7. The method according to one of claims 1 to 6, wherein the individual fold signatures (13) and/or sections (12) of a printed product (14) have different dimensions and/or are arranged offset to one another.

8. The method according to one of claims 1 to 7, wherein a first reference point (24-1) with the same coordinates is transferred from the same reference point as the first anchor point (22) to all pdf pages (21) belonging to a printed product (14), and is mirrored around the central line, which is parallel to the folding edge, of each pdf page (20) belonging to the same printed product (14) to a second reference point (24-2), wherein either the first or the second reference point (24-1, 24-2) of a pdf page (21) is arranged congruently on the corresponding anchor point (22, 23) for the positionally accurate placement of a pdf page (21) on the corresponding virtual signature sheet (11), and wherein the pdf page (21) is simultaneously arranged within the respective placement of the signature sheet (11) .

## Revendications

1. Procédé d'établissement automatisé de jeux de données de production pour des commandes à imprimer dans un dispositif d'impression pour des produits d'impression (14) comportant une pluralité de pages,
dans lequel un produit d'impression (14) est composé d'au moins une signature de pliage (13),
une signature de pliage (13) du produit d'impression (14) est composée d'au moins une section (12) composée d'une pluralité de feuilles de signature réelles ou d'au moins une feuille de signature réelle,
le contenu imprimé de chacune de ces feuilles de signature réelles étant représenté dans une signature PDF virtuelle (20) qui est composée d'une pluralité de pages PDF (21) et/ou d'au moins un ensemble de marques, des données de tâches d'une commande à imprimer sont acheminées vers un module d'exclusion,
les possibilités de production d'au moins un dispositif de traitement disponible dans le dispositif d'impression étant mises à la disposition du module d'exclusion pour calculer des données d'exclusion,
le module d'exclusion, en se basant sur les données de tâches et les données d'exclusion, établit de manière automatisée un jeu de données de production complet qui constitue une description claire de la commande (tâche) à imprimer,
pour obtenir les données d'exclusion,
a) sur n'importe quelle page du produit d'impression (14), au moins un premier point d'ancrage (22) est mis,
b) cet au moins un point d'ancrage (22) est transféré sur une courbe (25) définie sur la base d'un modèle du produit d'impression fini sur toutes les pages du produit d'impression (14), chaque point d'intersection de la courbe (25) avec chacune des pages du produit d'impression (14) donnant un nouveau point d'ancrage de page (23),
c) les signatures de pliage (13) faisant partie d'un produit d'impression (14) sont réparties en cas de besoin dans les sections respectives (12) et/ou dans les feuilles de signature respectives (11), de sorte que, sur chacune des feuilles de signature (11), en fonction d'au moins un paramètre de produit, les points d'ancrage de pages (23) pour les pages respectives sont enregistrés,
d) pour finaliser les signatures PDF virtuelles (20), les pages PDF (21) et/ou ensembles de marques respectifs sont placés sur les sections (12) et/ou les feuilles de signature (11) de manière à ce qu'au moins un point de référence (24-1,24-2) défini sur la page PDF (21) soit disposé avec le même recouvrement sur le point d'ancrage de page respectif (23) ou le point d'ancrage (22).

2. Procédé selon la revendication 1, dans lequel une droite est utilisée comme courbe (25).

3. Procédé selon la revendication 2, dans lequel la droite est disposée perpendiculairement aux pages disposées parallèlement du produit d'impression fermé.

4. Procédé selon une des revendications 1 à 3, dans lequel sont comprises comme paramètres de produits par exemple la taille des pages PDF respectives (21) et/ou la position des plis et/ou les intervalles nécessaires et/ou les dépassements nécessaires et/ou les décalages de positions de plis, par exemple pour tenir compte de la position des plis pour les produits d'impression épais et/ou la densité du support d'impression et/ou le rognage nécessaire.

5. Procédé selon une des revendications 1 à 4, dans lequel le transfert du premier point d'ancrage (22) se fait au moyen de la courbe (25) sur toutes les pages concernées du produit d'impression (14) à partir d'un modèle tridimensionnel du produit d'impression (14).

6. Procédé selon une des revendications 1 à 5, dans lequel le décalage nécessaire et/ou l'étirement nécessaire d'une page pour la compensation d'au moins un paramètre de produit a lieu par une courbure bidimensionnelle ou tridimensionnelle correspondante de la courbe (25).

7. Procédé selon une des revendications 1 à 6, dans lequel les signatures de pliage (13) et/ou sections individuelles (12) d'un produit d'impression (14) présentent des dimensions différentes et/ou sont disposées décalées les unes des autres.

8. Procédé selon une des revendications 1 à 7, dans lequel un premier point de référence (24-1) de mêmes coordonnées est transféré par le même point de référence que le premier point d'ancrage (22) sur toutes les pages PDF (21) faisant partie d'un produit d'impression (14) et réfléchi autour de la ligne médiane parallèle au bord d'enveloppe de chaque page PDF (20) faisant partie du même produit d'impression (14) vers un second point de référence (24-2), sachant que, pour le placement en position correcte d'une page PDF (21) sur la feuille de signature virtuelle correspondante (11), soit le premier, soit le second point de référence (24-1,24-2) d'une page PDF (21) est disposé de manière congruente sur le point d'ancrage corrélatif (22,23), et la page PDF (21) est disposée en même temps dans le placement respectif de la feuille de signature (11).
